# EUROPÄISCHE PATENTSCHRIFT

(11) **EP 1 967 074 B1**
(45) Veröffentlichungstag und Bekanntmachung des Hinweises auf die Patenterteilung: **18.06.2014**
(21) Anmeldenummer: 08004292.2
(22) Anmeldetag: 07.03.2008
(51) Int. Cl.: A22C 11/12, B65B 51/04, B65B 59/00

(54) **Schließwerkzeugbaugruppe**
Closing tool assembly
Composant d'outil de fermeture

(30) Priorität: 08.03.2007 DE 102007011423
(43) Veröffentlichungstag der Anmeldung: 10.09.2008
(73) Patentinhaber: Poly-clip System GmbH & Co. KG, 65795 Hattersheim (DE)
(72) Erfinder: Ebert, Detlef, 61231 Bad Nauheim (DE)
(74) Vertreter: Eisenführ Speiser

(56) Entgegenhaltungen:
- EP-A- 1 746 030
- WO-A-00/41933
- US-A- 2 545 560
- US-A- 4 043 011
- US-A- 4 624 165

## Beschreibung

Die Erfindung betrifft eine Schließwerkzeugbaugruppe für eine Clipmaschine, insbesondere eine Wurstclipmaschine, gemäß dem Oberbegriff des Anspruchs 1. Im einzelnen weist die Schließwerkzeugbaugruppe wenigstens einen ersten und mindestens einen zweiten Werkzeugträger auf, die einander gegenüberliegend sowie reversibel aufeinander zu bewegbar sind und die jeweils wenigstens ein erstes sowie mindestens ein zweites Schließwerkzeug tragen, wobei das erste und das zweite Schließwerkzeug mittels Fixiereinrichtungen lösbar an dem ersten und dem zweiten Werkzeugträger auswechselbar gehalten sind.

Solche Schließwerkzeuge für eine Wurstclipmaschine sind beispielsweise aus der europäischen Patentanmeldung 1 140 633 bekannt. Dabei besitzt eine Matrize eine trogartige Ausnehmung, die so ausgebildet ist, dass der Boden eines zu setzenden Verschlussclips und ein angrenzender Abschnitt der Schenkel dieses Clips abgestützt werden. Weiterhin weist ein Stempel auf der der Matrize zugewandten Seite eine konkave Ausnehmung auf, in der beim Zusammenfahren von Matrize und Stempel die Enden des Verschlussclips zusammengebogen und aneinander gepresst werden.

Das US-Patent 4,034,011 offenbart eine Verpackungsmaschine zum Verschließen von beutelförmigen Verpackungen in einer Vakuumkammer, wo die Beutel mit dem darin enthaltenen Produkt mittels einer Einschnür- und Clipvorrichtung verschlossen werden. Die Einschnür- und Clipvorrichtung weist einen Stempel auf, der einen in von Einschnürblechen gebildeten Clipkanal zugeführten Clip vom Clipvorrat abtrennt und in Richtung der Zopfachse des zu einem Zopf geformten Beutelabschnitts gegen eine Matrize treibt. Dabei umschließt der Clip den Zopf und wird durch Stempel sowie Matrize verschlossen. Ein zwischen den Einschnürblechen angeordnetes, ebenfalls schwenkbares Messer trennt die verschlossene Verpackung vom restlichen Verpackungsmaterial.

Aus dem US-Patent 2,545,560 ist eine Presse mit einem unteren und einem oberen Presswerkzeug bekannt. Die Presse weist eine untere und eine obere Basisplatte auf. Die untere Basisplatte besitzt eine trapezförmige Ausnehmung mit einer Schwalbenschwanzführung, in der eine Halteplatte mit einer korrespondierenden Führung eingesetzt ist und auf der Blöcke aufgeschraubt sind, an denen das untere Presswerkzeug befestigt ist. Eine Sperrklinke mit einer Schraube ist an die Basisplatte geschraubt, um ein Herausrutschen der Halteplatte zu verhindern. Zum Austauschen des Presswerkzeugs wird die Sperrklinke entfernt und die Halteplatte mit dem darauf angebrachten Presswerkzeug aus der Führung gezogen. Die in Einschubrichtung konisch zulaufende Schwalbenschwanzführung begrenzt automatisch die Einschubtiefe. An der oberen Basisplatte ist eine entsprechende Schwalbenschwanzführung vorgesehen, in die eine Trägerplatte mit dem oberen Stempelwerkzeug eingeschoben wird und mit einer Sperrklinke gesichert werden kann.

Bei dieser an sich sehr bewährten Technik kann ein Nachteil aber dann bestehen, wenn die Schließwerkzeuge ausgetauscht werden müssen, sei es, um verschlissene Teile zu ersetzen, oder sei es, um die Clipmaschine an andere Verpackungsgrößen anzupassen. Denn bei der vorbekannten Schließwerkzeugbaugruppe sind die Schließwerkzeuge an den Werkzeugträgern mittels Schrauben und dgl. befestigt. Daher müssen bei einem Wechsel der Schließwerkzeuge diese Schrauben gelöst, die Schließwerkzeuge aus ihren Aufnahmen an den Werkzeugträgern herausgezogen werden, anschließend die neuen Werkzeuge in die Aufnahmen der Werkzeugträger eingesetzt und schließlich auch die Schrauben in die Schraubenlöcher des Werkzeugträgers bzw. der Schließwerkzeuge eingefädelt werden. Dabei ist auf eine korrekte Ausrichtung der Schließwerkzeuge zu achten, damit das Setzen und Verschließen eines Verschlussclips in der gewünschten Genauigkeit erfolgt. Bei diesen Arbeiten muss an der Clipmaschine entsprechendes Arbeitswerkzeug bereitgehalten werden. Darüber hinaus muss mit diesem Arbeitswerkzeug in dem verhältnismäßig engen Raum im Bereich der Schließwerkzeugbaugruppe beim Wechsel gearbeitet werden. Die hierzu benötigten Werkzeuge sind in der Regel nicht rostfrei.

Dieser Nachteil soll mit der vorliegenden Erfindung überwunden werden. Es ist daher Aufgabe der Erfindung, eine Schließwerkzeugbaugruppe für Clipmaschinen der eingangs genannten Art bereitzustellen, die ein einfaches und schnelles Austauschen der Schließwerkzeuge erlaubt.

Die vorstehende Aufgabe wird durch die Merkmale des Anspruchs 1 gelöst. In den sich daran anschließenden Ansprüchen 2 bis 7 finden sich vorteilhafte Ausgestaltungen.

Durch das Vorsehen einer Linearführungskontur an zumindest einem der beiden Werkzeugträger und einer hierzu komplementären Linearführungsgegenkontur an dem zugehörigen Schließwerkzeug entsprechend der vorliegenden Erfindung ist es möglich, das Schließwerkzeug mit geringem Aufwand und ohne zusätzliches Werkzeug vom Werkzeugträger zu entfernen und durch ein gewünschtes zu ersetzen. Zum Wechsel eines oder beider Schließwerkzeuge muss nur die Fixiereinrichtung gelöst werden. Anschließend können die Schließwerkzeuge aus den jeweiligen durch die Linearführungskontur an dem Werkzeugträger und der Linearführungsgegenkontur an dem Schließwerkzeug gebildeten Führungen herausgezogen und neue Schließwerkzeuge in die Führungen eingeschoben werden, was schnell und ohne zusätzliches Werkzeug realisiert werden kann.

Die Linearführungen sorgen dabei auch auf einfache Weise für eine korrekte Ausrichtung der Schließwerkzeuge zueinander.

Sind die Linearführungskontur des Werkzeugträgers und die Linearführungsgegenkontur an dem zugehörigen Schließwerkzeug jeweils in den Ebenen der beiderseitigen Kontaktflächen vorgesehen, werden die Linearführungskonturen durch die Druckkräfte beim Verschließen der Clips nicht belastet, so dass die Schließwerkzeuge beim Verschließen nicht verschoben werden. Sind demgegenüber die Linearführungskontur des Werkzeugträgers und die Linearführungsgegenkontur an dem zugehörigen Schließwerkzeug jeweils zumindest annährend senkrecht zu den Ebenen der beiderseitigen Kontaktflächen angeordnet, werden diese zwar durch die Druckkräfte beim Verschließen der Clips belastet, erfahren aber keine Kräfte in ihre Verschieberichtung, wodurch auch hier die Schließwerkzeuge gegenüber den Werkzeugträgern beim Verschließen der Clips nicht verschoben werden. Dabei können die vorgeschlagenen Führungen Kräfte senkrecht zur Verschieberichtung aufzunehmen, was der Belastungsrichtung beim Verschließen der Clips entspricht.

Für die Linearführungskontur bzw. die Linearführungsgegenkontur können die unterschiedlichsten Ausgestaltungen gewählt werden. Bevorzugt ist, wenn die durch die Linearführungskontur des Werkzeugträgers und durch die Linearführungsgegenkontur des Schließwerkzeugs gebildete Linearführung eine Flachführung ist. An Stelle einer Flachführung kann auch eine Prismenführung, eine Schwalbenschwanzführung oder eine zylindrische Führung vorgesehen werden.

Es ist weiterhin vorteilhaft, wenn die durch die Linearführungskontur des Werkzeugträgers und durch die Linearführungsgegenkontur des Schließwerkzeugs gebildete Linearführung mindestens einen Positionieranschlag aufweist. Hierdurch wird auf sichere und einfache Weise das, betrachtet in Einführrichtung, hintere Ende des Verschiebeweges des Schließwerkzeuges markiert und dessen Position gegenüber dem Werkzeugträger festlegt.

Für die Fixiereinrichtung können ebenfalls die unterschiedlichsten Lösungen vorgesehen werden. Besonders vorteilhaft ist es, wenn die Fixiereinrichtung wenigstens ein Fixierelement aufweist, das aus einer Fixierstellung in eine Freigabestellung reversibel bewegbar ist. Weist dabei die Fixiereinrichtung wenigstens ein Betätigungselement zum vorzugsweise manuellen Bewegen des Fixierelements aus der Fixierstellung in die Freigabestellung auf, ist das Fixierelement von außen zugänglich und kann so von Hand betätigt werden. Hierdurch kann der Wechsel der Schließwerkzeuge vollständig ohne Werkzeuge ausgeführt werden.

Der Bewegungsweg des Fixierelements kann zu dem Bewegungsweg, der durch die Linearführungskontur des Werkzeugträgers und der Linearführungsgegenkontur des Schließwerkzeugs definiert wird, eine beliebige Ausrichtung aufweisen. Ist das Fixierelement reversibel aus der Fixierstellung in die Freigabestellung in eine Richtung zumindest annährend senkrecht zu der Führungsrichtung der durch die Linearführungskontur des Werkzeugträgers und durch die Linearführungsgegenkontur des Schließwerkzeugs gebildete Linearführung bewegbar, wird eine platzsparende Anordnung der Fixiereinrichtung ermöglicht..

Um die Fixierstellung des Fixierelements sicher aufrechterhalten zu können, ist es weiterhin vorteilhaft, wenn das Fixierelement in die Fixierstellung durch mindestens ein elastisches Element, vorzugsweise eine Druckfeder vorgespannt ist. An Stelle der elastischen Vorspannung des Fixierelements kann auch vorgesehen sein, dass das Fixierelement in zwei definierte Stellungen, d.h. der Fixierstellung und der Freigabestellung reversibel bewegbar ist. Dabei können die beiden definierten Stellungen beispielsweise durch Rastungen und dgl. gebildet sein.

Es ist weiterhin vorteilhaft, wenn das Fixierelement eine Einführschräge aufweist, die das Einführen des Schließwerkzeuges in die Linearführungskontur vereinfacht. Ergänzend oder alternativ hierzu kann auch am Schließwerkzeug selbst eine Einführschräge vorgesehen sein, die vorteilhaft komplementär zur Einführschräge des Fixierelementes gestaltet ist.

Ein besonders raumsparende Ausgestaltung der erfindungsgemäßen Schließwerkzeugbaugruppe kann dadurch erreicht werden, dass die Fixiereinrichtung an dem Werkzeugträger angebracht ist.

Weitere vorteilhafte Ausgestaltungen sowie ein Ausführungsbeispiel werden nachstehend im Zusammenhang mit der Beschreibung einer Ausführungsform in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen. Dabei zeigt:
- Fig.1:: eine perspektivische Darstellung eines Stempels der erfindungsgemäßen Schließwerkzeugbaugruppe, betrachtet von der Rückseite einer diese Schließwerkzeugbaugruppe aufweisenden Clipmaschine;
- Fig.2:: eine perspektivische Darstellung einer Matrize der erfindungsgemäßen Schließwerkzeugbaugruppe, betrachtet von der Vorderseite einer diese Schließwerkzeugbaugruppe aufweisenden Clipmaschine;
- Fig.3a:: eine Vorderansicht des Stempels der erfindungsgemäßen Schließwerkzeugbaugruppe;
- Fig. 3b:: eine Schnittdarstellung des Stempels entlang der Linie A-A in Fig. 3a;
- Fig.4a:: eine Vorderansicht der Matrize der erfindungsgemäßen Schließwerkzeugbaugruppe; und
- Fig.4b:: eine Schnittdarstellung der Matrize entlang der Linie B-B in Fig. 4a.

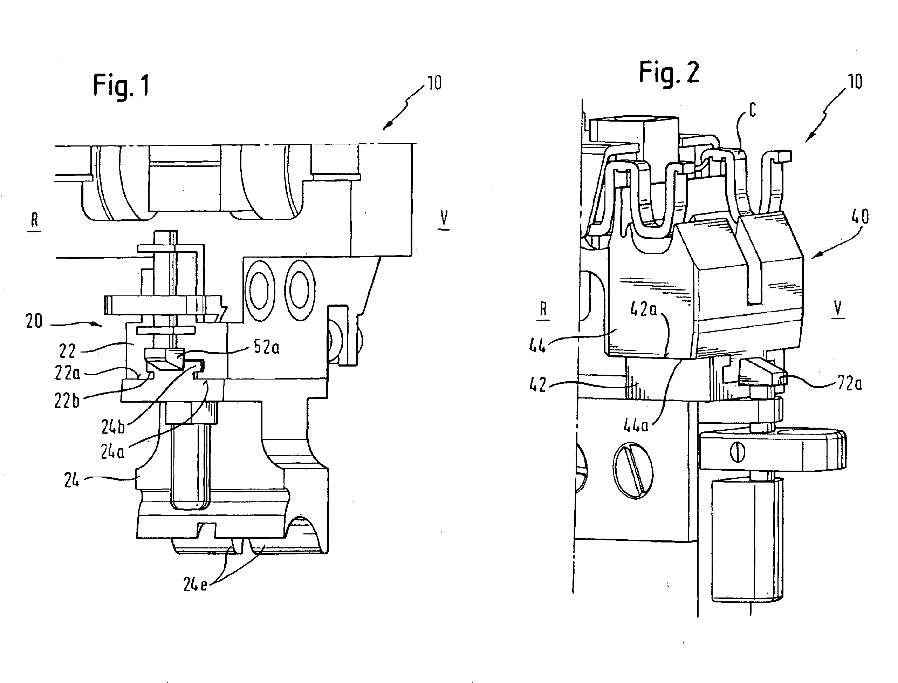

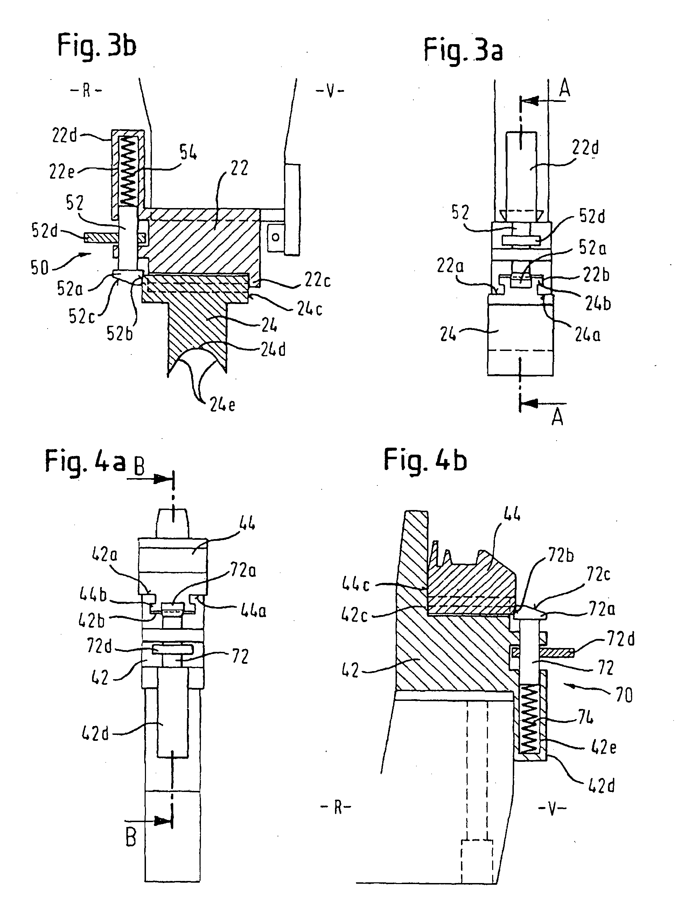

Wie insbesondere aus den Fig. 1 und 2 entnehmbar ist, weist eine erfindungsgemäße Schließwerkzeugbaugruppe 10 für eine Clipmaschine, insbesondere für eine Wurstclipmaschine, als Hauptbestandteile einen Stempel 20 und eine unter dem Stempel 20 angeordnete Matrize 40 auf. Der Stempel 20 sowie die Matrize 40 können in vertikaler Richtung (vgl. Fig. 3b und 4b) reversibel aufeinander zu und von einander wegbewegt werden, um aus einer Bereitschaftsstellung in eine Clipschließstellung, und umgekehrt, zu gelangen. In den Fig. 3b und 4b sind der Stempel 20 und die Matrize 40 der erfindungsgemäßen Schließwerkzeugbaugruppe 10 in der Bereitschaftsstellung, d.h. in der auseinander gefahrenen Stellung dargestellt.

Im üblichen Betrieb einer Wurstclipmaschine befindet sich in etwa in der Mitte zwischen dem Stempel 20 und der Matrize 40, insbesondere in der Bereitschaftsstellung der erfindungsgemäßen Schließwerkzeugbaugruppe 10, ein nicht näher dargestellter, füllgutfreier Zopfabschnitt eines Wursthüllenmaterials. An den füllgutfreien Zopfabschnitt schließt sich in horizontaler Richtung auf der einen Seite der Schließwerkzeugbaugruppe 10 ein ebenfalls nicht näher dargestellter füllgutfreier Abschnitt des Wursthüllenmaterials an, das von einem Vorrat abgezogen wird. Auf der anderen Seite der Schließwerkzeugbaugruppe 10 schließt sich ebenfalls in horizontaler Richtung demgegenüber ein mit Füllgut, hier Wurstbrät, gefüllter Abschnitt des Wursthüllenmaterials an, der eine noch entstehende Wurst bildet (nicht dargestellt). An dem vorderen freien Wurstende des bereits mit Wurstbrät gefüllten Wursthüllenabschnitt wurde die Wursthülle durch die Schließwerkzeugbaugruppe 10 mittels eines Verschlussclips C füllgutdicht verschlossen.

Der Verschlussclip C kann aus einem geprägten Aluminiumdraht hergestellt und mit mehreren weiteren Clips C zu einem nicht näher dargestellten Clipstrang zusammengefasst sein, wobei die Clips C U- bzw. V-förmig vorgebogen sind (vgl. Fig. 2) und mittels an ihren Schenkelenden abgekröpften Stegen zusammenhängen. Zum Setzen eines Verschlussclips C wird der vorderste Clip C der Matrize 40 in bekannter Weise durch den Vorschub des Clipstrangs zugeführt. Solange der vorderste Clip C noch mit dem nachfolgenden Clipstrang verbunden ist, wird er von diesem stabil in der Matrize 40 gehalten.

Beim Verschließen des Clips C kann zunächst die Matrize 40 in ihre Verschluß-oder Hubendstellung gefahren werden. In dieser Stellung wird der vorderste Clip C gegen den füllgutfreien Zopfabschnitt des Wursthüllenmaterials, der sich zu Beginn der Bewegung der Matrize 40 in etwa in der Mitte zwischen Stempel 20 und Matrize 40 befindet, gedrückt und ist zwischen diesem sowie der Matrize 40 eingespannt. Anschließend bewegt sich der Stempel 20 auf die Matrize 40 zu. Unmittelbar vor dem Verschließen des Clips C wird zunächst mittels einer an den Schließwerkzeugen 20, 40 vorgesehenen, nicht näher bezeichneten Schereinrichtung der vorderste Clip C von dem nachfolgenden Clipstrang abgetrennt. In diesem Moment ist der vorderste Clip C frei und wird nur noch durch die Spannung des Zopfabschnitts gegen die Matrize 40 angedrückt. Daraufhin wird der Clip C durch eine weitere Annäherung des Stempels 20 an die Matrize 40 verformt, bis sich die Schließwerkzeuge 20, 40 soweit angenähert haben, dass der Clip C um den füllgutfreien Zopfabschnitt herum füllgutdicht verschlossen ist.

Fig.1 zeigt den Stempel 20 der erfindungsgemäßen Schließwerkzeugbaugruppe 10. Die wesentlichen Bestandteile des Stempels 20 sind ein Werkzeugträger 22 und ein ein erstes Schließwerkzeug bildendes Schließstempelwerkzeug 24. Der Werkzeugträger 22 ist fest mit einer nicht näher bezeichneten ersten Betätigungseinrichtung der Clipmaschine verbunden, die den Werkzeugträger 22 sowie das Schließstempelwerkzeug 24 verfährt, um diese aus ihrer Bereitschaftsstellung in die Clipschließstellung reversibel zu bewegen.

Der quaderförmige Werkzeugträger 22 aus Stahl besitzt an seiner Oberseite 22a, die im montierten Zustand nach unten in Richtung zu der Matrize 40 weist, eine im Querschnitt C-förmige Linearführungskontur 22b, die sich ebenfalls im montierten Zustand über die gesamte Oberseite 22a des Werkzeugträgers 22 in einer Ausrichtung von der Vorderseite V zu der Rückseite R der Clipmaschine erstreckt und die zur geführten Aufnahme des Schließstempelwerkzeugs 24 dient. An ihrem hinteren Ende ist die Linearführungskontur 22b mit einem von der Oberseite 22a des Werkzeugträgers 22 hervorstehenden Positionieranschlag 22c versehen, der die Einführbewegung des Schließstempelwerkzeugs 24 begrenzt und diesem eine definierte Lage gegenüber dem Werkzeugträger 22 verleiht.

Wie Fig. 3b zeigt, ist der Werkzeugträger 22 in einer Ausrichtung an der Clipmaschine lösbar, beispielsweise durch nicht näher bezeichnete Schrauben, angebracht, dass der Positionieranschlag 22c zu der Vorderseite V der Clipmaschine weist und sich die Linearführungskontur 22b von der Maschinenrückseite R zu dem Positionieranschlag 22c erstreckt. Mit anderen Worten ist die Linearführungskontur 22b bei dieser Ausrichtung des Werkzeugträgers 22 aus Richtung der Maschinenrückseite R zugänglich. Grundsätzlich kann aber der Werkzeugträger 22 in einer Ausrichtung in der Weise an der Clipmaschine angebracht werden, dass der Positionieranschlag 22c zu der Rückseite R der Clipmaschine weist und das Schließstempelwerkzeug 24 von der Vorderseite V der Clipmaschine in die Linearführungskontur 22b des Werkzeugträgers 22 eingeschoben werden kann.

Das ebenfalls aus Stahl hergestellte und zumindest annährend die Form eines Amboß aufweisende Schließstempelwerkzeug 24 besitzt an seiner Unterseite 24a, die im montierten Zustand des Werkzeugs 24 nach oben weist, ebenfalls eine Linearführungskontur 24b, die als Linearführungsgegenkontur zu der Linearführungskontur 22b des Werkzeugträgers 22 korrespondiert und daher einen T-förmigen Querschnitt zeigt. Zwischen der Linearführungskontur 22b des Werkzeugträgers 22 und der Linearführungskontur 24b des Schließstempelwerkzeugs 24 ist eine leichte Schiebepassung vorgesehen, so dass das Werkzeug 24 mit seiner Linearführungskontur 24b leicht in die Linearführungskontur 22b des Werkzeugträgers 22 eingeschoben und von dort wieder herausgezogen werden kann. Wie bereits erwähnt, wird die Einschubbewegung des Schließstempelwerkzeugs 24 durch den Positionieranschlag 22c des Werkzeugträgers 22 begrenzt, der gegen die Rückseite 24c des Werkzeugs 24 bei Erreichen der Endposition anliegt.

An der Oberseite 24d des Schließstempelwerkzeugs 24, die im montierten Zustand des Werkzeugs 24 nach unten weist, sind nebeneinander, aber beabstandet zueinander zwei Clipformgebungsabschnitte 24e vorgesehen. Wie aus den Fig. 1 und 3b erkennbar ist, besitzen die beiden Clipformgebungsabschnitte 24e die Form des auf dem Kopf stehenden Buchstabens "V" mit abgerundeten unteren Ende. Mittels der beiden Clipformgebungsabschnitte 24e können durch das Schließstempelwerkzeug 24 zwei Clips zeitgleich verarbeitet werden.

An der dem Positionieranschlag 22c gegenüberliegenden Ende des Werkzeugträgers 22 ist dieser weiterhin mit einer Fixiereinrichtung 50 versehen, die das Schließstempelwerkzeug 24 gegen Herausrutschen aus der Linearführungskontur 22b des Werkzeugträgers 22 sichert. Die Fixiereinrichtung 50 ist an einem zylinderförmigen Fortsatz 22d des Werkzeugträgers 22 vorgesehen. Der Fortsatz 22d besitzt hierzu eine Sacklochbohrung 22e, in der unverlierbar ein ein Fixierelement bildender Betätigungshammer 52 der Fixiereinrichtung 50 in der Weise geführt ist, dass der Betätigungshammer 52 entlang der Bohrungsachse der Sacklochbohrung 22e zwischen einer Fixierstellung und einer Freigabestellung hin- und her bewegbar ist. Zwischen dem Boden der Sacklochbohrung 22e und dem Betätigungshammer 52 ist noch eine Schraubendruckfeder 54 vorgesehen, die den Betätigungshammer 52 in die Fixierstellung elastisch vorspannt.

Der Betätigungshammer 52 besitzt einen Hammerkopf 52a, der an seiner zu dem Werkzeugträger 22 weisenden Seite eine Anschlagfläche 52b aufweist, an der das Schließstempelwerkzeug 24 anliegt, wenn es in die Linearführungskontur 22b des Werkzeugträgers 22 eingeführt ist. An der gegenüberliegenden Seite ist der Hammerkopf 52a mit einer Einführschräge 52c versehen, über die das Schließstempelwerkzeug 24 beim Einführen des Werkzeugs 22 mit seiner vorauseilenden Kante hinweggleitet und dabei den Betätigungshammer 52 entgegen der Wirkung der Schraubendruckfeder 54 in die Sacklochbohrung 22e in dessen Freigabestellung einschiebt. Um diesen Vorgang noch zu erleichtern, kann vorteilhafter Weise eine zusätzliche, mit der Einführschräge 52c korrespondierende Einführschräge an dem Positionieranschlag zugewandten Ende des Schließstempelwerkzeugs und auf dessen Unterseite vorgesehen sein.

Am Betätigungshammer 52 ist darüber hinaus ein Betätigungselement 52d, welches zum vorzugsweise manuellen Betätigen des Betätigungshammer 52 dient, um das Schließstempelwerkzeug im Falle beispielsweise eines Werkzeugwechsels von dem Werkzeugträger 22 abnehmen zu können. Hierdurch und durch die Linearführung zwischen Werkzeugträger 22 und Schließstempelwerkzeug 24 kann der Wechsel des Schließstempelwerkzeugs 24 ohne jedes Werkzeug ausgeführt werden.

Nach dem das Schließstempelwerkzeug 24 vollständig über den Hammerkopf 52a des Betätigungshammers 52 hinweggefahren ist, wird der Betätigungshammer 52 durch die Schraubendruckfeder 54 aus der Freigabestellung wieder in die Fixierstellung zurück bewegt und das Schließstempelwerkzeug 24 in seiner Position an dem Werkzeugträger 22 lösbar fixiert. Um das Schließstempelwerkzeug 24 von dem Werkzeugträger 22 zu entfernen, muss lediglich der Betätigungshammer 52 entgegen der Wirkung der Schraubendruckfeder 54 in die Sacklochbohrung 22e hineingedrückt werden, beispielsweise von Hand durch das Betätigungselement 52d, so dass das Schließstempelwerkzeug 24 aus der Linearführungskontur 22b des Werkzeugträgers 22 herausgezogen werden kann.

Fig.2 zeigt die Matrize 40 der erfindungsgemäßen Schließwerkzeugbaugruppe 10. Die wesentlichen Bestandteile der Matrize 40 sind ein Werkzeugträger 42 und ein ein zweites Schließwerkzeug bildendes Schließmatrizenwerkzeug 44. Der Werkzeugträger 42 ist fest mit einer nicht näher bezeichneten zweiten Betätigungseinrichtung der Clipmaschine verbunden, die den Werkzeugträger 42 sowie das Schließmatrizenwerkzeug 44 verfährt, um diese aus ihrer Bereitschaftsstellung in die Clipsschließstellung reversibel zu bewegen.

Der ebenfalls quaderförmige Werkzeugträger 42 aus Stahl besitzt an seiner Oberseite 42a, die im montierten Zustand nach oben in Richtung zu der des Stempels 20 weist, eine im Querschnitt C-förmige Linearführungskontur 42b, die sich über die gesamte Oberseite 42a des Werkzeugträgers 42 in einer Ausrichtung von der Vorderseite V zu der Rückseite R der Clipmaschine erstreckt und die zur geführten Aufnahme des Schließmatrizenwerkzeugs 44 dient. An ihrem hinteren Ende ist die Linearführungskontur 42b mit einem von der Oberseite 42a des Werkzeugträgers 42 hervorstehenden Positionieranschlag 42c versehen, der die Einführbewegung des Schließmatrizenwerkzeugs 44 begrenzt und diesem eine definierte Lage gegenüber dem Werkzeugträger 42 verleiht.

Wie Fig. 4b zeigt, ist der Werkzeugträger 42 in der Weise an der Clipmaschine lösbar, beispielsweise durch nicht näher bezeichnete Schrauben, gehalten, dass der Positionieranschlag 42c zu der Rückseite R der Clipmaschine weist und sich die Linearführungskontur 42b von der Maschinenvorderseite V zu dem Positionieranschlag 42c erstreckt. Grundsätzlich kann aber der Werkzeugträger 42 in einer Ausrichtung in der Weise an der Clipmaschine angebracht werden, dass der Positionieranschlag 42c zu der Rückseite R der Clipmaschine weist und das Schließmatrizenwerkzeug 44 von der Vorderseite V der Clipmaschine in die Linearkontur 42b des Werkzeugträgers 42 eingeschoben werden kann.

Das ebenfalls aus Stahl hergestellte Schließmatrizenwerkzeug 44 besitzt an seiner Unterseite 44a ebenfalls eine Linearführungskontur 44b, die als Linearführungsgegenkontur zu der Linearführungskontur 42b des Werkzeugträgers 42 korrespondiert und daher einen T-förmigen Querschnitt zeigt. Zwischen der Linearführungskontur 42b des Werkzeugträgers 42 und der Linearführungskontur 44b des Schließmatrizenwerkzeugs 44 ist ebenfalls eine leichte Schiebepassung vorgesehen, so dass das Werkzeug 44 mit seiner Linearführungskontur 44b leicht in die Linearführungskontur 42b des Werkzeugträgers 42 eingeschoben und von dort wieder herausgezogen werden kann. Auch hier wird die Einschubbewegung durch den Positionieranschlag 42c des Werkzeugträgers 42 begrenzt, der gegen die Rückseite 44c des Werkzeugs 44 bei Erreichen der Endposition anliegt.

An der dem Positionieranschlag 42c gegenüberliegenden Ende des Werkzeugträgers 42 ist dieser mit einer Fixiereinrichtung 70 versehen, die das Schließmatrizenwerkzeug 44 gegen Herausrutschen aus der Linearführungskontur 42b des Werkzeugträgers 42 sichert und die einen identischen Aufbau zeigt, wie die Fixiereinrichtung 50 an dem Stempel 20. Daher wird auf eine weitergehende Beschreibung verzichtet (Die Bezugszeichen sind entsprechend der Fixiereinrichtung 50 gewählt und um 20 erhöht.).

Abschließend ist noch zu bemerken, dass die Erfindung nicht auf die in den Fig.1 bis 4 dargestellte Linearführungskonturen 22b, 24b beschränkt ist. Als Linearführungskonturen 22a, 24b können auch eine Schwalbenschwanzführung, eine Prismenführung oder eine zylindrische Führung vorgesehen sein. Ebenso ist es möglich, die Schließwerkzeugbaugruppe 10 so zu gestalten, dass die Linearführungskonturen 22a, 24b senkrecht zur Berührungsebene der Schließwerkzeuge 20, 30 angeordnet ist.

### Bezugszeichen

- 10: Schließwerkzeugbaugruppe
- 20: Stempel
- 22: Werkzeugträger
- 22a: Oberseite
- 22b: Linearführungskontur
- 22c: Positionierungsanschlag
- 22d: zylinderförmiger Fortsatz
- 22e: Sacklochbohrung
- 24: Verschließstempelwerkzeug
- 24a: Unterseite
- 24b: Linearführungskontur
- 24c: Rückseite
- 24d: Oberseite
- 24e: Clipformgebungsabschnitte

- 40: Matrize
- 42: Werkzeugträger
- 42a: Oberseite
- 42b: Linearführungskontur
- 42c: Positionierungsanschlag
- 42d: zylinderförmiger Fortsatz
- 42e: Sacklochbohrung
- 44: Verschließmatrizenwerkzeug
- 44a: Unterseite
- 44b: Linearführungskontur
- 44c: Rückseite

- 50: Fixiereinrichtung (Stempel)
- 52: Betätigungshammer
- 52a: Hammerkopf
- 52b: Anschlagfläche
- 52c: Einführschräge
- 52d: Betätigungselement
- 54: Schraubendruckfeder
- 70: Fixiereinrichtung (Matrize)
- 72: Betätigungshammer
- 72a: Hammerkopf
- 72b: Anschlagfläche
- 72c: Einführschräge
- 72d: Betätigungselement
- 74: Schraubendruckfeder
- C: Clip
- V: Vorderseite
- R: Rückseite

## Patentansprüche

1. Schließwerkzeugbaugruppe für eine Clipmaschine, insbesondere für eine Wurstclipmaschine, enthaltend wenigstens einen ersten und mindestens einen zweiten Werkzeugträger (22, 42), die einander gegenüberliegend sowie reversibel aufeinander zu bewegbar sind und die jeweils wenigstens ein erstes sowie mindestens ein zweites Schließwerkzeug (24, 44) tragen, wobei das erste und das zweite Schließwerkzeug (24, 44) mittels jeweils wenigstens einer Fixiereinrichtung (50, 70) an dem ersten und dem zweiten Werkzeugträger (22, 42) auswechselbar gehalten sind,
**dadurch gekennzeichnet, dass** an zumindest einem der beiden Werkzeugträger (22, 42) eine Linearführungskontur (22b, 42b) und an dem zugehörigen Schließwerkzeug (24, 44) eine hierzu komplementäre Linearführungsgegenkontur (24b, 44b) vorgesehen ist,
dass die Fixiereinrichtung (50, 70) wenigstens einen Betätigungshammer (52, 72) aufweist, das aus einer Fixierstellung in eine Freigabestellung reversibel bewegbar ist,
dass die Fixiereinrichtung (50, 70) wenigstens ein Betätigungselement (52d, 72d) zum vorzugsweise manuellen Bewegen des Betätigungshammers (52, 72) aus der Fixierstellung in die Freigabestellung aufweist, und
dass der Betätigungshammer (52, 72) reversibel aus der Fixierstellung in die Freigabestellung in eine Richtung zumindest annähernd senkrecht zu der Führungsrichtung der durch die Linearführungskontur (22b, 42b) des Werkzeugträgers (22, 42) und durch die Linearführungsgegenkontur (24b, 44b) des Schließwerkzeugs (24, 44) gebildete Linearführung bewegbar ist.

2. Schließwerkzeugbaugruppe nach Anspruch 1,
**dadurch gekennzeichnet, dass** der erste und der zweite Werkzeugträger (22, 42) sowie das erste und das zweite Schließwerkzeug (24, 44) mit einer Linearführungskontur (22b, 42b) sowie einer hierzu korrespondierenden Linearführungsgegenkontur (24b, 44b) versehen sind, wobei die Einführrichtung des ersten Schließwerkzeugs (24) an dem ersten Werkzeugträger (22) entgegengesetzt zu der Einführrichtung des zweiten Schließwerkzeugs (44) an dem zweiten Werkzeugträger (42) ist.

3. Schließwerkzeugbaugruppe nach Anspruch 1 oder 2,
**dadurch gekennzeichnet, dass** die durch die Linearführungskontur (22b, 42b) des Werkzeugträgers (22, 42) und durch die Linearführungsgegenkontur (24b, 44b) des Schließwerkzeugs (24, 44) gebildete Linearführung mindestens einen Positionieranschlag aufweist.

4. Schließwerkzeugbaugruppe nach einem der Ansprüche 1 bis 3,
**dadurch gekennzeichnet, dass** der Betätigungshammer (52, 72) in die Fixierstellung durch mindestens ein elastisches Element (54, 74), vorzugsweise durch eine Druckfeder vorgespannt ist.

5. Schließwerkzeugbaugruppe nach einem der Ansprüche 1 bis 4,
**dadurch gekennzeichnet, dass** der Betätigungshammer (52, 72) eine Einführschräge (52c, 72c) aufweist.

6. Schließwerkzeugbaugruppe nach einem der Ansprüche 1 bis 5,
**dadurch gekennzeichnet, dass** das Schließwerkzeug (12, 44) eine Einführschräge aufweist.

7. Schließwerkzeugbaugruppe nach einem der Ansprüche 1 bis 6,
**dadurch gekennzeichnet, dass** die Fixiereinrichtung (50, 70) an dem Werkzeugträger (22, 24) angebracht ist.

## Claims

1. A closing tool assembly for a clip machine, in particular for a sausage clipping machine, containing at least one first and at least one second tool holder (22, 42), which can be moved to positions opposite each other and reversibly towards each other, and each of which supports at least one first and at least one second closing tool (24, 44), wherein the first and second closing tool (24, 44) are each replaceably held on the first and the second tool holder (22, 42) by means of a fixing device (50, 70),
**characterised in that** a linear guide contour (22b, 42b) is provided on at least one of the two tool holders (22, 42) and a linear guide counter-contour (24b, 44b) complementary thereto is provided on the associated closing tool (24, 44),
that the fixing device (50, 70) has at least one actuating hammer (52, 72) which can be moved reversibly from a fixing position to a release position,
that the fixing device (50, 70) has at least one actuating element (52d, 72d) for moving the actuating hammer (52, 72) preferably manually from the fixing position to the release position, and
that the actuating hammer (52, 72) can be moved reversibly from the fixing position to the release position in a direction at least approximately perpendicular to the guide direction of the linear guide formed by the linear guide contour (22b, 42b) of the tool holder (22, 42) and by the linear guide counter-contour (24b, 44b) of the closing tool (24, 44).

2. The closing tool assembly of claim 1,
**characterised in that** the first and the second tool holder (22, 42) as well as the first and the second closing tool (24, 44) are provided with a linear guide contour (22b, 42b) and with a matching linear guide counter-contour (24b, 44b), wherein the direction of insertion for the first closing tool (24) on the first tool holder (22) is opposite to the direction of insertion for the second closing tool (44) on the second tool holder (42).

3. The closing tool assembly of claim 1 or 2,
**characterised in that** the linear guide formed by the linear guide contour (22b, 42b) of the tool holder (22, 42) and by the linear guide counter-contour (24b, 44b) of the closing tool (24, 44) has at least one positioning stop.

4. The closing tool assembly of any of claims 1 to 3,
**characterised in that** the actuating hammer (52, 72) is biased into the fixing position by at least one elastic element (54, 74), preferably by a pressure spring.

5. The closing tool assembly of any of claims 1 to 4,
**characterised in that** the actuating hammer (52, 72) has an insertion bevel (52c, 72c).

6. The closing tool assembly of any of claims 1 to 5,
**characterised in that** the closing tool (12, 44) has an insertion bevel.

7. The closing tool assembly of any of claims 1 to 6,
**characterised in that** the fixing device (50, 70) is mounted on the tool holder (22, 24).

## Revendications

1. Module d'outil de fermeture d'une machine d'agrafage, notamment d'une machine d'agrafage de saucisses, comportant au moins un premier et au moins un deuxième porte-outil (22, 42) qui sont mobiles l'un en regard de l'autre ainsi que l'un sur l'autre réversiblement et qui portent respectivement au moins un premier ainsi qu'un deuxième outil (24, 44) de fermeture, le premier et le deuxième outils (24, 44) de fermeture étant au moyen respectivement d'au moins un dispositif (50, 70) d'immobilisation maintenus avec possibilité de remplacement sur le premier et sur la deuxième porte-outil (22,42),
**caractérisé en ce qu'**il est prévu, sur au moins l'un des deux porte-outil (22, 42) un contour (22b, 42b) de guidage linéaire et, sur l'outil (24, 44) de fermeture associé, un contre contour (24b, 44b) de guidage linéaire complémentaire à celui-ci,
**en ce que** le dispositif (50, 70) d'immobilisation a au moins un marteau (52, 72) d'actionnement, qui est mobile réversiblement d'une position d'immobilisation à une position de libération,
**en ce que** le dispositif (50, 70) d'immobilisation a au moins un élément (52d, 72d) d'actionnement pour faire passer, de préférence manuellement, le marteau (52, 72) d'actionnement de la position d'immobilisation à la position de libération, et
**en ce que** le marteau (52, 72) d'actionnement peut passer réversiblement de la position d'immobilisation à la position de libération dans une direction au moins à peu près perpendiculaire à la direction de guidage linéaire formée par le contour (22b, 42b) de guidage linéaire du porte-outil (22, 42) et par le contre contour (24b, 44b) de guidage linéaire de l'outil (24, 44) de fermeture.

2. Module d'outil de fermeture suivant la revendication 1,
**caractérisé en ce que** le premier et le deuxième porte-outil (22, 42) ainsi que le premier et le deuxième outils (24, 44) de fermeture sont pourvus d'un contour (22b, 42b) de guidage linéaire ainsi que d'un contre contour (24b, 44b) de guidage linéaire lui correspondant, le sens d'amenée du premier outil (24) de fermeture sur le premier porte-outil (22) étant contraire au sens d'amenée du deuxième outil (44) de fermeture sur le deuxième porte-outil (42).

3. Module d'outil de fermeture suivant la revendication 1 ou 2,
**caractérisé en ce que** le guidage linéaire formé par le contour (22b, 42b) de guidage linéaire du porte-outil (22, 42) et par le contre contour (24b, 44b) de guidage linéaire de l'outil (24, 44) de fermeture a au moins une butée de mise en position.

4. Module d'outil de fermeture suivant l'une des revendications 1 à 3,
**caractérisé en ce que** le marteau (52, 72) d'actionnement est, dans la position d'immobilisation, contraint par au moins un élément (54, 74) élastique, de préférence par un ressort de compression.

5. Module d'outil de fermeture suivant l'une des revendications 1 à 4,
**caractérisé en ce que en ce que** le marteau (52, 72) d'actionnement a un biseau (52c, 72c) d'entrée.

6. Module d'outil de fermeture suivant l'une des revendications 1 à 5,
**caractérisé en ce que** l'outil (12, 44) de fermeture a un biseau d'entrée.

7. Module d'outil de fermeture suivant l'une des revendications 1 à 6,
**caractérisé en ce que** le dispositif (50, 70) d'immobilisation est mis sur le porte-outil (22, 24).
